# EUROPEAN PATENT APPLICATION

(11) **EP 4 517 984 A1**
(43) Date of publication of application: **05.03.2025**
(21) Application number: 23194532.0
(22) Date of filing: 31.08.2023
(51) Int. Cl.: H01M 50/298, H01M 10/42, H01M 10/48, H01M 10/63, H01M 50/569

(54) **BATTERY ARRANGEMENT**

(71) Applicant: ABB SCHWEIZ AG, 5400 Baden (CH)
(72) Inventor: SCHULER, Gabriel, 6415 Arth (CH); HE, Minglong, 5400 Baden (CH); TROENDLE, Pirmin, 79761 Waldshut-Tiengen (DE); LANDMANN, Daniel, 4125 Riehen (CH)
(74) Representative: Sykora & König Patentanwälte PartG mbB

(57) **Abstract**

A battery arrangement (20) is provided. The battery arrangement (20), comprises: two or more battery cells (22), wherein the battery cells (22) are arranged next to each other; and temperature safety means (30) for detecting an over-temperature of one or more of the battery cells (22), wherein the temperature safety means (30) comprise at least one cable (32) which is mechanically coupled to the battery cells (22), with the cable (32) comprising at least one electric conductor (42) extending through the cable (32) in axial direction, and an electric insulation (28) between the conductor (42) and the battery cell (22), with the electric insulation (28) being configured for electrically isolating the electric conductor (42) against the battery cell (22) and with the electric insulation (28) being configured for ensuring a breakdown voltage of at least 1 kV.

## Description

### FIELD OF THE INVENTION

The invention relates to the field of battery arrangements, as e.g. battery modules and/or battery packs. In particular, the invention relates to a battery arrangement comprising two or more battery cells and temperature safety means for detecting an over-temperature of one or more of the battery cells, wherein the battery cells are arranged next to each other.

### BACKGROUND OF THE INVENTION

An increasing number of vehicles, e.g. cars, trains, subways, busses, is equipped with high-performance, in particular high-voltage (HV), battery cells. A typical high-performance battery arrangement may be able to provide voltages of 400 V and more, and/or may have a nominal capacity between 1 Ah and 1000 Ah. Such a battery cell may be used for driving the corresponding vehicle, in particular for providing a power train of the corresponding vehicle with energy.

The battery cells, in particular the high-performance battery cells, may comprise e.g. lithium-ion cells and sodium-ion cells. The Li-ion cells may fail in non-energetic and energetic modes. Non-energetic cell failures, which show no thermal runway but cause the permanent or irreversible damage to the cell, may mainly affect the reliability of the battery. Non-energetic failures may include capacity fading, internal resistance increase, cell swelling, electrolyte leakage and the consequent cell dry-out. Sometimes, in a later stage in time, non-energetic failures may be associated with not only the cell ageing process but also the root cause of later energetic failures. Energetic cell failures may be associated with a self-sustaining exothermic reaction within the cell, e.g. leading to thermal runaway.

Abnormal or abused, in other words worn out battery cells may lead to a failure of the whole battery module and/or battery pack. For safety concerns, it may be crucial to detect at least the energetic failures because of the thermal runaway.

In particular, a clear and error free battery system abuse detection may be a key to safely handle battery abuse cases and initiate appropriate safety and firefighting measures. There are abuse detection sensors known which are able to sense battery string internal air temperatures sometimes resulting in a relatively late and/or inaccurate abuse detection. One key aspect in battery system module sensing represents appropriate high voltage isolation, in particular in the case of the high-performance battery cells, what is sometimes used by introduction of fiber based or wireless sensor integration. Such solutions may safely bridge high voltages but show drawbacks concerning simple and cost-efficient integration.

BMS based temperature measurements may be an alternative, but sometimes are not really close to the actual cell temperatures and are only available if BMS systems are running or idling.

### DESCRIPTION OF THE INVENTION

Therefore, it is an objective of the present invention to provide a battery arrangement comprising at least two battery cells, which may be cost-efficient and/or which may contribute to safely detect an over-temperature of one or more of the battery cells.

This objective is achieved by the subject-matter of the independent claims. Further exemplary embodiments are evident from the dependent claims and the following description.

In particular, an objective of the present invention is achieved by a battery arrangement, comprising: two or more battery cells, wherein the battery cells are arranged next to each other; and temperature safety means for detecting an over-temperature of one or more of the battery cells, wherein the temperature safety means comprise at least one cable which is mechanically coupled to the battery cells, with the cable comprising at least one electric conductor extending through the cable in axial direction, and an electric insulation between the conductor and the battery cell, with the electric insulation being configured for electrically isolating the electric conductor against the battery cell and with the electric insulation being configured for ensuring a breakdown voltage of at least 1 kV.

In particular, the electric insulation may be configured for ensuring a breakdown voltage of at least 1,5 kV, e.g. at least 2 kV, e.g. at least 10 kV. In addition, an upper boarder of the breakdown voltage ensured by the electric insulation may be 50 kV or 100 kV. That the electric insulation is configured for ensuring a breakdown voltage of at least 1 kV may mean in this context that the electric insulation enables operating voltages of the battery arrangement of at least 400 V. This may translate to ensure a breakdown voltage of at least 1 kV in order to comply with multiple norms and regulations, as they are known in the art. The electric insulation may be configured for ensuring the breakdown voltage by having a sufficient dielectric strength and thickness to ensure the breakdown voltage. The electric insulation ensuring the breakdown voltage may comprise one single body having the corresponding dielectric strength and thickness on its own, or may comprise two or more bodies having the corresponding dielectric strengths and thicknesses in order to provide the breakdown voltage together, as explained in the following. In particular, the electric isolation, in particular the corresponding electric insulation, may comprise a part of the cable, a part of a holder for holding the cable, and/or a separate electric insulation being arranged between the cable and the corresponding battery cell.

Each of the battery cells may comprise a corresponding cell hull surrounding an interior of the corresponding battery cell, two battery tabs for electrically contacting the corresponding battery cell, and optionally a vent disc which may break in case of an inner pressure of the battery cell exceeding a predetermined pressure threshold. Further, the battery cells, which are arranged directly next to each other may be coupled to each other via a cell-to-cell connector. Furthermore, the vent discs of neighbouring ones of the battery cells may be coupled to each other via a vent channel for guiding gases exiting the battery cells via the vent discs. The cable may be mechanically coupled to the battery cells by directly coupling the cable to the cell hulls, the battery tabs, or the vent discs, such that the cable touches the corresponding cell hulls, battery tabs, or, respectively, vent discs. Alternatively, the cable may be mechanically coupled to the battery cells by directly coupling the cable to the cell-to-cell connectors at the corresponding battery cells or between the corresponding battery cells such that the cable touches the corresponding cell-to-cell connectors. Alternatively, the cable may be mechanically coupled to the battery cells by arranging the cable within the vent channel.

The conductor may be a wire. The conductor may comprise or may be made of a metal, e.g. copper, silver, or gold. The cable may comprise two or more of the conductors. The axial direction may be parallel to a longitudinal axis of the conductor. The axial direction may be perpendicular to the radial direction.

The battery cells may be configured for providing a high voltage (HV), e.g. a voltage in a range from 400 V to 10 kV, e.g. from 500 V to 5 kV, e.g. from 1 kV to 5 kV. The battery cells each may be a high-performance battery cell having a nominal capacity between 1 Ah and 1500 Ah. In particular, the nominal capacity may be between 20 Ah and 1000 Ah, e.g. between 25 Ah and 600 Ah.

According to an embodiment, the cable comprises an electrically isolating cable jacket surrounding the electric conductor in radial direction. For example, the conductor may be embedded within the cable jacket. The cable jacket may comprise or may be formed of plastic and/or ceramics, e.g. a polymer with ceramic particles embedded therein, e.g. an insulation polymer, or of an oxide-based material. The cable jacket may be referred to as lagging or, in case of the conductor being a wire, as wire insulation.

According to an embodiment, the cable jacket comprises a thickness and a dielectric strength configured such that the cable jacket ensures the breakdown voltage on its own. For example, the dielectric strength may be within a region from 1 kV/mm to 200 kV/mm, e.g. from 5 kV/mm to 200 kV/mm, e.g. from 10 kV/mm to 100 kV/mm. In addition, the thickness of the cable jacket may be in a range from 0.025 mm to 10 mm, e.g. 0.1 mm to 5 mm, e.g. from 0.5 mm to 4 mm, e.g. from 1 mm to 3 mm. This may contribute to a very simple and cost-efficient solution, because the cable only is needed for ensuring the breakdown voltage.

According to an embodiment, the cable comprises two electric conductors being spaced apart from and electrically isolated against each other and extending parallel and/or twisted to each other. For example, the electric conductors may be embodied as two or correspondingly more wires. All conductors of the cable may be embedded within the cable jacket. Optionally, the cable may be configured such that the material of the cable jacket is also present between the conductors such that the conductors are electrically isolated against each other by the material of the cable jacket. For example, a voltage may be supplied to the conductors such that there is a potential difference between the two conductors and this potential difference may change by a change of the temperature of the cable thereby enabling to monitor the temperature of the cable and thereby of the battery cells.

According to an embodiment, the cable comprises a melting material configured for melting, when a temperature of the melting material exceeds a predetermined temperature threshold, the conductors are embedded within the melting material, and the melting material is arranged radially between the conductors. Optionally, the melting material may be arranged radially between the conductors and the cable jacket. The predetermined temperature threshold may be in a range from 50 °C to 400 °C, e.g. from 55 °C to 200 °C, e.g. from 60 °C to 150°C. The cable may be heated by the battery cells, in particular via the direct or indirect physical contact between the cable and the battery cells. When the battery cells arrive at a temperature which may cause harm to the battery cells, the temperature of the cable may be a little bit less than the actual temperature of the battery cells. So, the melting material must be chosen such that the melting temperature of the melting material is a little bit below the temperature critical for the battery cells and/or the battery arrangement. In case of the voltage being supplied to the conductors such that there is a potential difference between the two conductors, a short may be generated when the melting material melts and the conductors touch each other. This short may be recognized, e.g. by a control unit coupled to the cable as described below, and may be used for determining that the over-temperature is present.

According to an embodiment, the temperature safety means comprise two or more holders for mechanically coupling the cable to the battery cells, the cable is coupled to the battery cells by corresponding ones of the holders, and the holders are arranged such that at least an insulation part of each of the holders is arranged between the cable and the corresponding battery cell. The holders, in particular the insulation parts of the holders, may be a part of the isolators providing the above breakdown voltage. The holders may comprise or may be formed of plastic and/or ceramics, e.g. a polymer with ceramic particles embedded therein, e.g. an insulation polymer, or of a oxide-based material. The holders may comprise engaging means, such as e.g. a clip, a latch, or one or more other snap in means.

According to an embodiment, the holders are configured such that a thickness and a dielectric strength of each of the insulation parts is sufficient for ensuring the breakdown voltage on their own. For example, the dielectric strength of the insulation parts of the holders may be within a region from 1 kV/mm to 200 kV/mm, e.g. from 5 kV/mm to 200 kV/mm, e.g. from 10 kV/mm to 100 kV/mm to ensure sufficient breakdown isolation capability. In addition, a thickness of the insulation parts of the holders may be in a range from 0.025 mm to 10 mm, e.g. 0.1 mm to 5 mm, e.g. from 0.5 mm to 4 mm, e.g. from 1 mm to 3 mm.

According to an embodiment, the cable jacket and the insulation parts are configured for ensuring the breakdown voltage together. So, the materials and thicknesses of the cable jacket and the insulation parts of the holders which are arranged between the cable and the battery cells are configured such that the cable jacket and those parts of the holders, which are arranged between the cable and the battery cells, ensure the breakdown voltage together. This may contribute to a large design freedom when choosing the materials and the thicknesses for the cable jacket and the insulation parts.

According to an embodiment, the temperature safety means comprise two or more insulation sheets, with the insulation sheets being arranged between the cable and the corresponding battery cells. The insulation sheets may comprise or may be made of plastic and/or ceramics, e.g. a polymer with ceramic particles embedded therein, e.g. an insulation polymer, or of an oxide-based material. The insulation sheets may be coupled to the corresponding battery cells by adhesive means, preferably thermally conductive and/or electrically isolating adhesive means. Alternatively or additionally, in case of the cable being coupled to the cells hulls by the holders, the insulation sheets may be sandwiched between the holders and the battery cells, or between the holders, the cable and the battery cells, such that the insulation sheet may at least in part be held at the corresponding battery cells by the holders, e.g. by a force fit.

According to an embodiment, each of the insulation sheets is configured for ensuring the breakdown voltage on its own. For example, the dielectric strength of each of the insulation sheets may be within a region from 1 kV/mm to 200 kV/mm, e.g. from 5 kV/mm to 200 kV/mm, e.g. from 10 kV/mm to 100 kV/mm. In addition, a thickness of the insulation sheets may be in a range from 0.025 mm to 10 mm, e.g. 0.1 mm to 5 mm, e.g. from 0.5 mm to 4 mm, e.g. from 1 mm to 3 mm. This may contribute to a very simple and cost-efficient solution, because the insulation sheets only are needed for ensuring the breakdown voltage.

According to an embodiment, the cable jacket and the insulation sheets are configured for ensuring the breakdown voltage together. So, the breakdown voltage may be ensured by combining the electric isolation properties of the cable jacket and the insulation sheets. This may contribute to a large design freedom when choosing the materials and the thicknesses for the cable jacket and the insulation sheets.

According to an embodiment, the insulation parts and the insulation sheets are configured for ensuring the breakdown voltage together. So, the breakdown voltage may be ensured by combining the electric isolation properties of the insulation parts and the insulation sheets. This may contribute to a large design freedom when choosing the materials and the thicknesses for the insulation parts and the insulation sheets.

According to an embodiment, the cable jacket, the insulation parts, and the insulation sheets are configured for ensuring the breakdown voltage together. So, the breakdown voltage may be ensured by combining the electric isolation properties of the cable jacket, the insulation parts, and the insulation sheets. This may contribute to a large design freedom when choosing the materials and the thicknesses for the cable jacket, the insulation parts, and the insulation sheets.

According to an embodiment, the temperature safety means comprise the control unit for monitoring the temperature of the battery cells, and the cable is coupled to the control unit. The control unit may be configured for monitoring one or more properties of the cable, e.g. by measuring electric properties, e.g. an electric potential, of the cable. For example, in case the cable comprises two conductors and the melting material between the conductors, the conductors may be coupled to the control unit and a voltage may be supplied to the conductors, e.g. via the control unit or via the battery cells. In case of one or more of the battery cells reaching the critical over-temperature or more, the melting material between the conductors is heated up to the predetermined temperature and melts, such that the conductors touch each other thereby generating a short. This short may be recognized by the control unit and the control unit may start one or more safety measures in order to avoid or at least delimit any harm to the battery arrangement or its surroundings.

Alternatively, according to an embodiment, the temperature safety means comprise at least one temperature sensor for each of the battery cells, the temperature sensors are arranged at the battery cells, the temperature sensors are electrically coupled to each other via the conductor of the cable, and the cable is coupled to the control unit. In this case, the cable may comprise only one conductor being configured for electrically coupling the temperature sensor to the control unit, and optionally for electrically coupling two or more of the temperature sensors with each other. For example, a bus system may be provided by the cable to which the temperature sensors are coupled. Further, in this case, the cable may be used as a communication link between the temperature sensor(s) and the control unit.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a side view of an exemplary embodiment of a battery arrangement;
Fig. 2 shows a side view of an exemplary embodiment of a battery cell of the battery arrangement of figure 1;
Fig. 3 shows a detailed cross-sectional view of an exemplary embodiment of a cable of the battery arrangement of figure 1;
Fig. 4 shows a detailed cross-sectional view of an exemplary embodiment of a cable of the battery arrangement of figure 1;
Fig. 5 shows a detailed cross-sectional view of an exemplary embodiment of a cable of the battery arrangement of figure 1;
Fig. 6 shows a detailed cross-sectional view of an exemplary embodiment of a cable of the battery arrangement of figure 1;
Fig. 7 shows a detailed cross-sectional view of an exemplary embodiment of a cable of the battery arrangement of figure 1;
Fig. 8 shows a side view of a battery cell of another exemplary embodiment of a battery arrangement;
Fig. 9 shows a side view of a battery cell of another exemplary embodiment of a battery arrangement;
Fig. 10 shows a side view of a battery cell of another exemplary embodiment of a battery arrangement;
Fig. 11 shows a side view of an exemplary embodiment of a battery arrangement;
Fig. 12 shows a top view of an exemplary embodiment of a battery arrangement;
Fig. 13 shows a top view of an exemplary embodiment of a battery arrangement;
Fig. 14 shows a top view of an exemplary embodiment of a battery arrangement.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

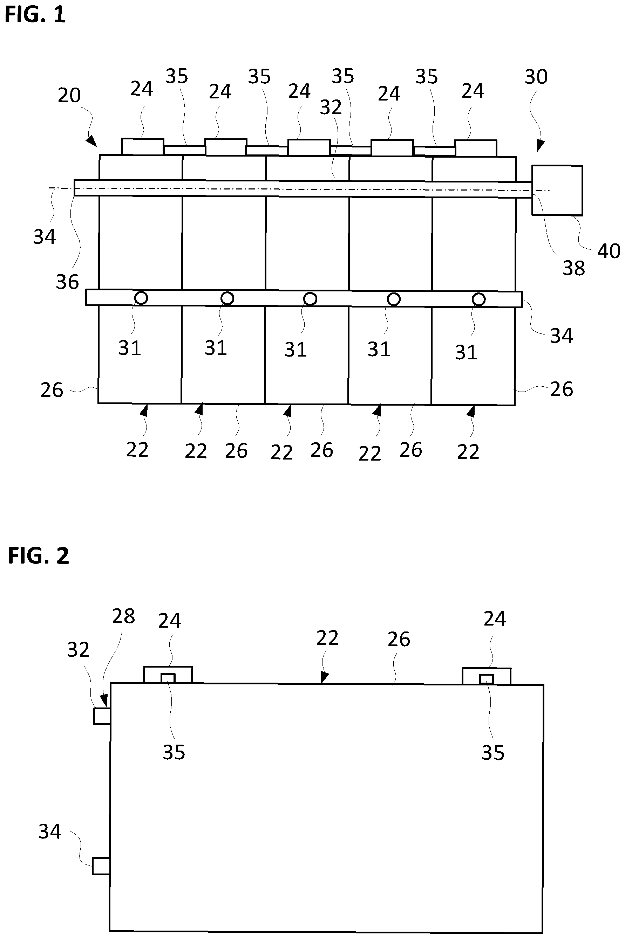

Fig. 1 shows a side view of an exemplary embodiment of a battery arrangement 20. The battery arrangement 20 comprises two or more battery cells 22, e.g. five battery cells 22. The battery cells 22 are arranged next to each other. The battery arrangement 20 may be referred to as battery module. Each of the battery cells 22 may comprise a corresponding cell hull 26 surrounding an interior of the corresponding battery cell 22, two battery tabs 24 for electrically contacting the corresponding battery cell 22, and optionally a vent disc 31 at or within the corresponding cell hull 26, a vent channel 34, and/or one or more cell-to-cell connectors 35.

As seen from figure 1, the vent discs 31 may be arranged at a lateral side of the corresponding cell hull 26. Alternatively, the vent discs 31 may be arranged on top of the battery cells 22, e.g. between the two battery tabs 24 of the corresponding battery cell 22, and/or at a surface of the cell hull 26 where the battery tabs 24 are located. The vent discs 31 of neighbouring ones of the battery cells 22 may be coupled to each other via a vent channel 34 for guiding gases exiting the battery cells 22 via the vent discs 31 to a surrounding of the battery arrangement 20. The vent discs 31 may break in case of an inner pressure of the corresponding battery cell 22 exceeding a predetermined pressure threshold such that a gas causing the inner pressure may exit the battery cell 22 via the broken vent disc 31 and, in case of the vent channel 34 being arranged, the gas may be guided to the surroundings by the vent channel 34 after exiting the battery cell 22 through the corresponding broken vent disc 31.

Further, the battery cells 22, which are arranged directly next to each other may be coupled to each other via a cell-to-cell connector 35 of the battery arrangement 20, as they are known in the art. Such cell-to-cell connectors 35 are widely used to electrically couple the battery tabs 24 of neighbouring ones of the battery cells 22 to each other, as shown in figure 1, in order to provide an electrically serial and/or parallel arrangement of the battery cells 22. In many cases, these cell-to-cell connectors 35 also provide a mechanical coupling of the corresponding battery cells 22 to each other. In some cases, the cell-to-cell connectors 35 provide the mechanical coupling of the corresponding battery cells 22 to each other only.

The battery cells 22 may be configured for providing a high voltage (HV), e.g. a voltage in a range from 400 V to 10 kV, e.g. from 500 V to 5 kV, e.g. from 1 kV to 5 kV. The battery cells 22 each may be a high-performance battery cell 22 having a nominal capacity between 1 Ah and 1500 Ah. In particular, the nominal capacity may be between 20 Ah and 1000 Ah, e.g. between 25 Ah and 600 Ah.

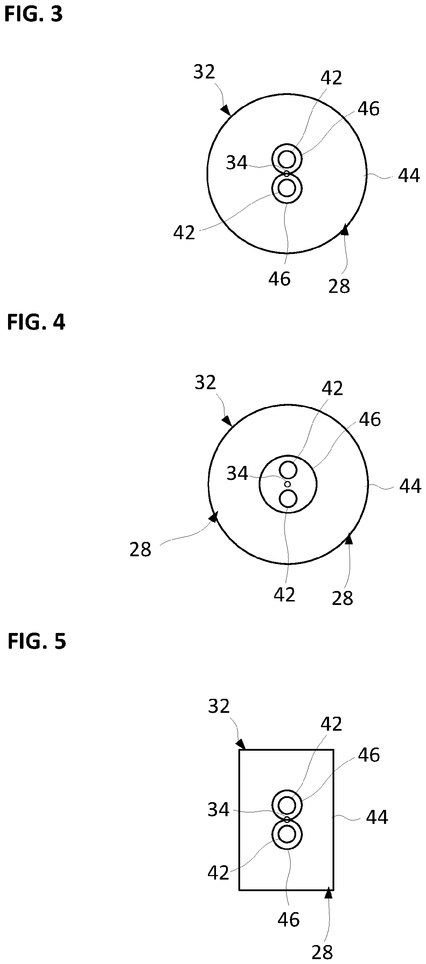

The battery arrangement 20 further comprises temperature safety means 30 for detecting an over-temperature of one or more of the battery cells 22. The temperature safety means 30 comprise at least one cable 32 which is mechanically coupled to the battery cells 22. The cable 32 comprises at least one electric conductor 42 (see figures 3 to 7) extending through the cable 32 in axial direction, i.e. in parallel to a longitudinal axis 34 of the cable 32. The axial direction may be perpendicular to a radial direction. The temperature safety means 30 further comprise an electric insulation 28 (see figure 2) between the conductor 42 and the battery cells 22, with the electric insulation 28 being configured for electrically isolating the electric conductor 42 against the battery cells 22 and with the electric insulation 28 being configured for ensuring a breakdown voltage of at least 400 V. In particular, the electric insulation 28 may be configured for ensuring a breakdown voltage of at least 1,5 kV, e.g. at least 2 kV, e.g. at least 10 kV. In addition, an upper boarder of the breakdown voltage ensured by the electric insulation may be 50 kV or 100 kV.

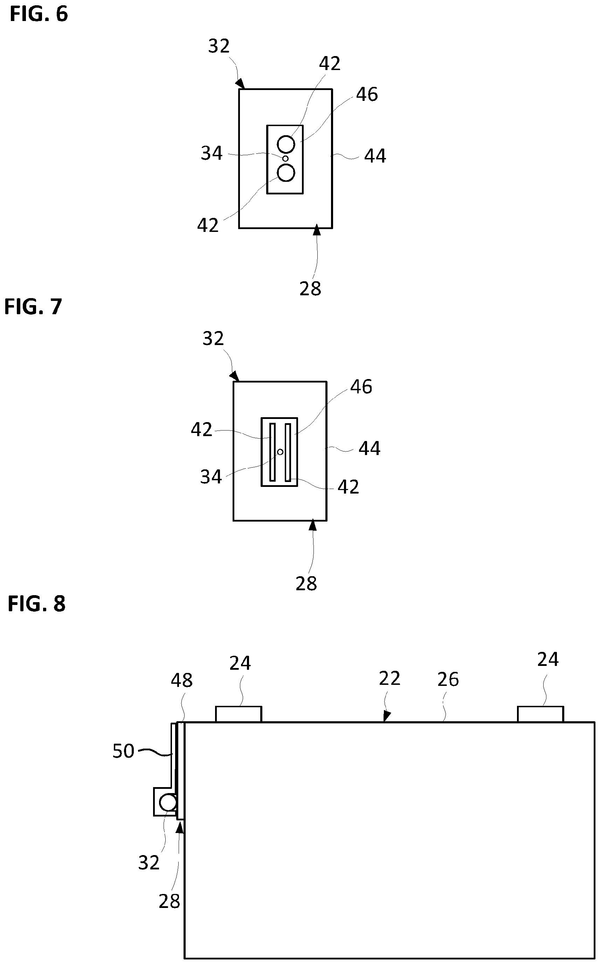

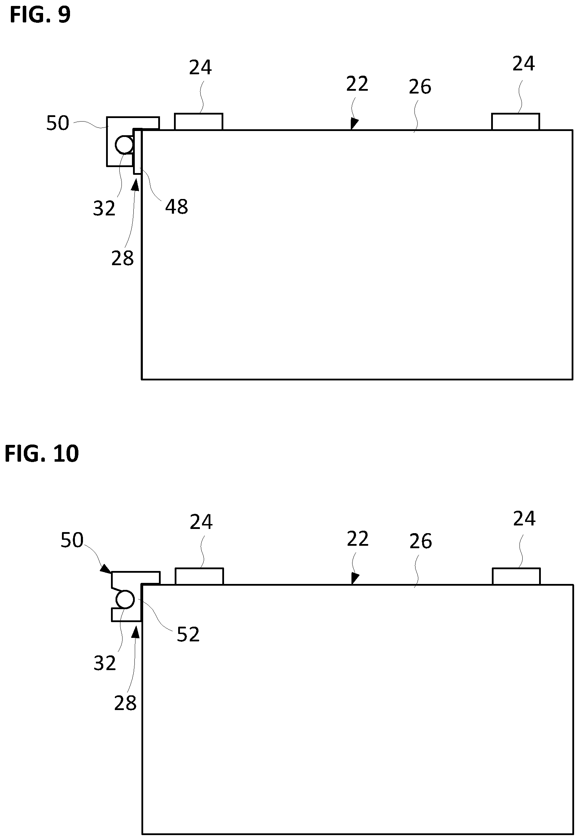

The electric insulation 28 may be configured for ensuring the breakdown voltage by an electric insulation 28 having a sufficient dielectric strength and thickness to ensure the breakdown voltage and providing the corresponding electric isolation. The electric insulation ensuring the breakdown voltage may comprise one single body having the corresponding dielectric strength and thickness on its own or may comprise two or more bodies having the corresponding dielectric strengths and thicknesses in order to provide the breakdown voltage together, as explained in the following. In particular, the electric insulation 28 may comprise a part of the cable 32, a holder 50 (see figures 8 to 10) for holding the cable 32, and/or an insulation sheet 48 (see figures 8 and 9) between the cable 32 and the corresponding battery cell 22.

The cable 32 may be mechanically coupled to the battery cells 22 by directly coupling the cable 32 to the cell hulls 26, the battery tabs 24, or the vent discs 31, such that the cable 32 touches the corresponding cell hulls 26, battery tabs 24, or, respectively, vent discs 31. Alternatively, the cable 32 may be mechanically coupled to the battery cells 22 by directly coupling the cable 32 to the cell-to-cell connectors 35 at the corresponding battery cells 22 or between the corresponding battery cells 22 such that the cable 32 touches the corresponding cell-to-cell connectors 35. Alternatively, the cable 32 may be mechanically coupled to the battery cells 22 by arranging the cable 32 within the vent channel 34.

The conductor 42 may be a wire. The conductor 42 may comprise or may be made of a metal, e.g. copper, silver or gold. The cable 32 may comprise two or more of the conductors 42.

The temperature safety means 30 may comprise a control unit 40 for monitoring the temperature of the battery cells 22, and the cable 32 may be coupled to the control unit 40. The control unit 40 may be configured for monitoring one or more properties of the cable 32, e.g. by measuring electric properties, e.g. an electric potential, of the cable 32.

Fig. 2 shows a side view of an exemplary embodiment of one of the battery cells 22 of the battery arrangement 20 of figure 1. From figure 2 it may be seen that the electric insulation 28 may be a part of the cable 32, wherein this part of the cable 32 may touch the cell hull 26 of the corresponding battery cell 22. Further, from figure 2 it may be seen that the battery arrangement 20 comprises the cell-to-cell connectors 35 at the top of the battery cell 22 and at the corresponding battery tabs 24.

Fig. 3 shows a detailed cross-sectional view of an exemplary embodiment of the cable 32 of the battery arrangement 20 of figure 1. The cable 32 may comprise an electrically isolating cable jacket 44 surrounding the electric conductor 42 in radial direction. For example, the conductor 42 may be embedded within the cable jacket 44. The cable jacket 44 may comprise or may be formed of plastic and/or ceramics, e.g. a polymer with ceramic particles embedded therein, e.g. an insulation polymer, or of a oxide-based material. The cable jacket 44 may be referred to as lagging or, in case of the conductor 42 being a wire, as wire insulation. The cable jacket 44 may provide the electric insulation 28 on its own. In other words, the cable jacket 44 may comprise a thickness and a dielectric strength configured such that the cable jacket 44 ensures the breakdown voltage on its own. For example, the dielectric strength of the material of the cable jacket 44 may be within a region from 1 kV/mm to 200 kV/mm, e.g. from 5 kV/mm to 200 kV/mm, e.g. from 10 kV/mm to 100 kV/mm. In addition, the thickness of the cable jacket 44, in particular measured from the conductors 42 to an outer surface of the cable jacket 44, may be in a range from 0.025 mm to 10 mm, e.g. 0.1 mm to 5 mm, e.g. from 0.5 mm to 4 mm, e.g. from 1 mm to 3 mm.

The cable 32 may comprises two electric conductors 42 being spaced apart from and electrically isolated against each other and extending parallel to each other. For example, the electric conductors 42 may be embodied as two or correspondingly more wires in a parallel and/or twisted arrangement. The conductors 42 may be coupled to the control unit 40 and a voltage may be supplied to the conductors 42, e.g. via the control unit 40 or via the battery cells 22. All conductors 42 of the cable 32 may be embedded within the cable jacket 44. Optionally, the cable 32 may be configured such that the material of the cable jacket 44 is also present between the conductors 42 such that the conductors 42 are electrically isolated against each other by the material of the cable jacket 44. That part of the cable jacket 44 which is arranged between the battery cells 22 and the conductors 42 may form the electric insulation 28 or at least a part of the electric insulation 28.

Alternatively, the cable 32 may comprise a melting material 46 configured for melting, when a temperature of the melting material 46 exceeds a predetermined temperature threshold. The conductors 42 may be embedded within the melting material 46. For example, as shown in figure 3, the melting material 46 may be arranged such that a part of the melting material 46 surrounds one of the conductors 42 in radial direction and that another part of the melting material 36 surrounds the other one of the conductors 42 in radial direction. Each part of the melting material 46 may have a cylindrical shape and the corresponding cylinders of the melting material 48 may extend in parallel to each other and to the axis 34 through the cable jacket 44 in axial direction. In the result, the melting material 46 may be arranged radially between the conductors 42. Additionally, the melting material 46 may be arranged radially between the conductors 42 and the cable jacket 44. The predetermined temperature threshold may be in a range from 50 °C to 400 °C, e.g. from 55 °C to 200 °C, e.g. from 60 °C to 150 °C.

The voltage may be supplied to the conductors 42 such that there is a potential difference between the two conductors 42 and this potential difference may change by a change of the temperature of the cable 32 thereby enabling to monitor the temperature of the cable 32 and thereby of the battery cells 22. In particular, the cable 32 may be heated by the battery cells 22, in particular via the direct or indirect physical contact between the cable 32 and the battery cells 22. When the battery cells 22 arrive at a temperature which may cause harm to the battery cells 22, the temperature of the cable 32 may be a little bit less than the actual temperature of the battery cells 22. So, the melting material 46 must be chosen such that the melting temperature of the melting material 46 is a little bit below the temperature critical for the battery cells 22 and/or the battery arrangement 20. In case of one or more of the battery cells 22 reaching the critical over-temperature or more, the melting material 46 between the conductors 42 is heated up to the predetermined temperature and melts, such that the conductors 42 touch each other. In case of the voltage being supplied to the conductors 42 such that there is the potential difference between the two conductors 42, a short may be generated when the melting material 46 melts and the conductors 42 touch each other. This short may be recognized, e.g. by the control unit 40, and may be used for determining that the over-temperature is present. Then, the control unit 40 may start one or more safety measures in order to avoid or at least delimit any harm to the battery arrangement 20 or its surroundings.

Fig. 4 shows a detailed cross-sectional view of an exemplary embodiment of the cable 32 of the battery arrangement 20 of figure 1. The cable 32 shown in figure 3 may widely correspond to the cable 32 described with respect to figure 3. Therefore and in order to provide a concise description, only those features of the cable shown in figure 4 are described in the following, in which the cable 32 shown in figure 4 differs from the cable 32 shown in figure 3.

From figure 4 it may be seen that the melting material 46 may be arranged such that the melting material 46 completely surrounds both conductors 42 in radial direction. The melting material 46 may be formed such that it has a cylindrical shape and/or is formed concentrical with the cable jacket 44. The corresponding cylinder of the melting material may extend in axial direction through the cable jacket 44.

Fig. 5 shows a detailed cross-sectional view of an exemplary embodiment of the cable 32 of the battery arrangement 20 of figure 1. The cable 32 shown in figure 5 may widely correspond to the cable 32 described with respect to figures 3 and 4. Therefore and in order to provide a concise description, only those features of the cable 32 shown in figure 5 are described in the following, in which the cable 32 shown in figure 5 differs from the cable 32 shown in figures 3 and 4.

From figure 5 it may be seen that the cable 32 may be formed such that it has a rectangular cross-section and as such a cuboid shape. The conductors 42 and the melting material 46 may be formed and arranged as shown in figure 3. However, in an alternative embodiment, the conductors 42 and the melting material 46 may be formed and arranged as shown in figure 4.

Fig. 6 shows a detailed cross-sectional view of an exemplary embodiment of the cable 32 of the battery arrangement 20 of figure 1. The cable 32 shown in figure 6 may widely correspond to the cable 32 described with respect to figures 3 to 5. Therefore and in order to provide a concise description, only those features of the cable 32 shown in figure 6 are described in the following, in which the cable 32 shown in figure 6 differs from the cable 32 shown in figures 3 to 5.

From figure 6 it may be seen that the melting material 46 may be formed such that it has a rectangular cross-section and as such a cuboid shape. The conductors 42 may be formed and arranged as shown in figures 3 to 5.

Fig. 7 shows a detailed cross-sectional view of an exemplary embodiment of the cable 32 of the battery arrangement 20 of figure 1. The cable 32 shown in figure 7 may widely correspond to the cable 32 described with respect to figures 3 to 6. Therefore and in order to provide a concise description, only those features of the cable 32 shown in figure 7 are described in the following, in which the cable 32 shown in figure 7 differs from the cable 32 shown in figures 3 to 6.

From figure 7 it may be seen that the conductors 42 may be formed such that each of them has a rectangular cross-section and as such a cuboid shape.

In the above-described embodiments of the cable 32, the melting material 46 always surrounds both of the conductors 42. However, in alternative embodiments, only one of the conductors 42 may be embedded in the melting material 46, whereas the other one of the conductors 42 may be free from the melting material 46.

Fig. 8 shows a side view of the battery cell 22 of another exemplary embodiment of the battery arrangement 20. The battery arrangement 20 comprises holders 50 for each of the battery cells 22, wherein the cable 32 may be coupled to the battery cells 22 by the corresponding holders 50. Each of the holders 50 may comprise or may be formed of plastic and/or ceramics, e.g. a polymer with ceramic particles embedded therein, e.g. an insulation polymer, or of an oxide-based material. Each of the holders 50 may comprise an engaging mean, such as e.g. a clip, a latch, or one or more other snap in means, for engaging the cable 32 with the corresponding holder 50.

The temperature safety means 30 may comprise two or more insulation sheets 48, with the insulation sheets 48 being arranged between the cable 32 and the corresponding battery cells 22. The insulation sheets 48 each may comprise or may be made of plastic and/or ceramics, e.g. a polymer with ceramic particles embedded therein, e.g. an insulation polymer, or of a oxide-based material. The insulation sheets 48 may be coupled to the corresponding battery cells 22 by adhesive means, preferably thermally conductive and/or electrically insulating adhesive means. Alternatively or additionally, in case of the cable 32 being coupled to the cells hulls 26 by the holders 50, the insulation sheets 48 may be sandwiched between the holders 50 and the battery cells 22, or between the holders 50, the cable 32 and the battery cells 22, such that the insulation sheets 48 may at least in part be held at the corresponding battery cells 22 by the holders 50, e.g. by a force fit.

Optionally, each of the insulation sheets 48 may be configured for ensuring the breakdown voltage on its own. In other words, according to one embodiment, the electric insulation 28 may be formed by the insulation sheets 48 only. Alternatively, the cable jacket 44 and the insulation sheets 48 may be configured for ensuring the breakdown voltage together. So, the breakdown voltage may be ensured by combining the electric isolation properties of the cable jacket 44 and the insulation sheets 48.

For example, the dielectric strength of each of the insulation sheets 48 may be within a range from 1 kV/mm to 200 kV/mm, e.g. from 5 kV/mm to 200 kV/mm, e.g. from 10 kV/mm to 100 kV/mm. In addition, a thickness of the insulation sheets 48 may be in a range from 0.025 mm to 10 mm, e.g. 0.1 mm to 5 mm, e.g. from 0.5 mm to 4 mm, e.g. from 1 mm to 3 mm.

Optionally, the battery cell 22 may be coupled to another battery cell 22 of the battery arrangement 20 by one or more of the cell-to-cell connectors 35. Further optionally, the battery cell 22 may comprise the vent disc 31. In this case, the vent disc 31 of the battery cell 22 may be coupled to the vent disc 31 of another one of the battery cells 22 by the vent channel 34.

Fig. 9 shows a side view of the battery cell 22 of another exemplary embodiment of the battery arrangement 20. The battery cell 22 shown in figure 9 may widely correspond to the battery cell 22 described with respect to figure 8. Therefore and in order to provide a concise description, only those features of the battery cell 22 shown in figure 9 are described in the following, in which the battery cell 22 shown in figure 9 differs from the battery cell 22 shown in figure 8.

From figure 9 it may be seen that each of the holders 50 may comprise an engaging mean, such as e.g. a clip, a latch, or one or more other snap in means, for engaging the corresponding holder 50 to the corresponding battery cell 22.

Optionally, the battery cell 22 may be coupled to another battery cell 22 of the battery arrangement 20 by one or more of the cell-to-cell connectors 35. Further optionally, the battery cell 22 may comprise the vent disc 31. In this case, the vent disc 31 of the battery cell 22 may be coupled to the vent disc 31 of another one of the battery cells 22 by the vent channel 34.

Fig. 10 shows a side view of the battery cell 22 of another exemplary embodiment of the battery arrangement 20. The battery cell 22 shown in figure 10 may widely correspond to the battery cell 22 described with respect to figure 9. Therefore and in order to provide a concise description, only those features of the battery cell 22 shown in figure 10 are described in the following, in which the battery cell 22 shown in figure 10 differs from the battery cell 22 shown in figure 9.

From figure 10 it may be seen that the holders 50 may be arranged such that at least an insulation part 52 of each of the holders 59 is arranged, in other words sandwiched, between the cable 32 and the corresponding battery cell 22. The holders 50, in particular the insulation parts 52 of the holders 50, may be at least a part of the electric insulation 28 providing the above breakdown voltage. The holders 50 may be configured such that a thickness and a dielectric strength of each of the insulation parts 52 is sufficient for ensuring the breakdown voltage on their own, such that the insulation sheets 48 are not needed. For example, the dielectric strength of the insulation parts 52 of the holders 50 may be within a region from 1 kV/mm to 200 kV/mm, e.g. from 5 kV/mm to 200 kV/mm, e.g. from 10 kV/mm to 100 kV/mm. In addition, a thickness of the insulation parts 52 of the holders 50 may be in a range from 0.025 mm to 10 mm, e.g. 0.1 mm to 5 mm, e.g. from 0.5 mm to 4 mm, e.g. from 1 mm to 3 mm.

Optionally, the cable jacket 44 and the insulation parts 52 may be configured for ensuring the breakdown voltage together. So, the materials and thicknesses of the cable jacket 44 and the insulation parts 52 of the holders 50 which are arranged between the cable 32 and the battery cells 22 are configured such that the cable jacket 44 and the insulation parts 52 ensure the breakdown voltage together.

Alternatively, the insulation parts 52 and the insulation sheets 48 may be configured for ensuring the breakdown voltage together. So, the breakdown voltage may be ensured by combining the electric isolation properties of the insulation parts 52 and the insulation sheets 48.

Alternatively, the cable jacket 44, the insulation parts 52, and the insulation sheets 48 may be configured for ensuring the breakdown voltage together. So, the breakdown voltage may be ensured by combining the electric isolation properties of the cable jacket 44, the insulation parts 52, and the insulation sheets 48.

Optionally, the battery cell 22 may be coupled to another battery cell 22 of the battery arrangement 20 by one or more of the cell-to-cell connectors 35. Further optionally, the battery cell 22 may comprise the vent disc 31. In this case, the vent disc 31 of the battery cell 22 may be coupled to the vent disc 31 of another one of the battery cells 22 by the vent channel 34.

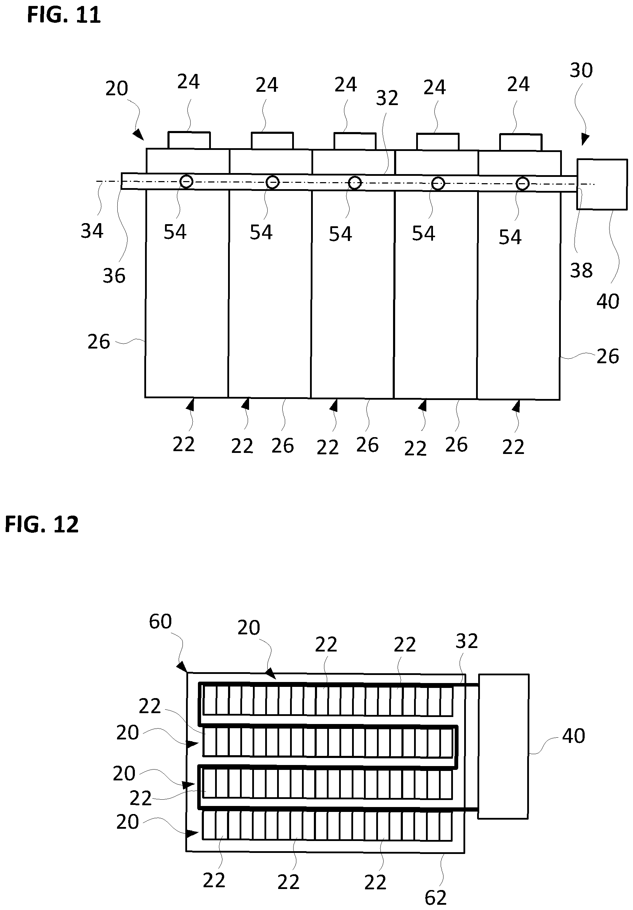

Fig. 11 shows a side view of an exemplary embodiment of a battery arrangement 20. The battery arrangement 20 shown in figure 11 may widely correspond to the battery arrangement 20 described with respect to figure 1. Therefore and in order to provide a concise description, only those features of the battery arrangement 20 shown in figure 11 are described in the following, in which the battery arrangement 20 shown in figure 11 differs from the battery arrangement 20 shown in figure 1.

The temperature safety means 30 may comprise at least one temperature sensor 54 for each of the battery cells 22. The temperature sensors 54 may be arranged directly at the battery cells 22. The temperature sensors 54 may be electrically coupled to each other via the conductor(s) 42 of the cable 32. The cable 32 may be coupled to the control unit 40. In this case, the cable 32 may comprise only one conductor 42 being configured for electrically coupling the temperature sensor 54 to the control unit 40, and optionally for electrically coupling two or more of the temperature sensors 54 with each other. For example, a bus system may be provided by the cable 32 to which bus system the temperature sensors 54 are coupled. Further, in this case, the cable 32 may be used as a communication link between the temperature sensor(s) 54 and the control unit 40.

Fig. 12 shows a top view of an exemplary embodiment of a battery arrangement 20. The battery arrangement 20 may be referred to as battery pack 60, comprising two or more, e.g. four battery modules. The battery pack 60 may comprise a casing 62 in which the battery modules, in particular the battery cells 22, are arranged. The battery arrangement 20 shown in figure 12 may widely correspond to the battery arrangement 20 described with respect to figures 1 or 11. Therefore and in order to provide a concise description, only those features of the battery arrangement 20 shown in figure 12 are described in the following, in which the battery arrangement 20 shown in figure 12 differs from the battery arrangements 20 shown in figures 1 and 11.

The battery arrangement 20 may comprise several rows of battery cells 22, i.e. the battery modules, being arranged next to each other. The rows may be arranged in parallel to each other. The cable 32 may extend along all of the rows. So, the temperature safety means 30 may comprise one cable 32 extending over all battery cells 22, in particular over all rows of battery cells 22.

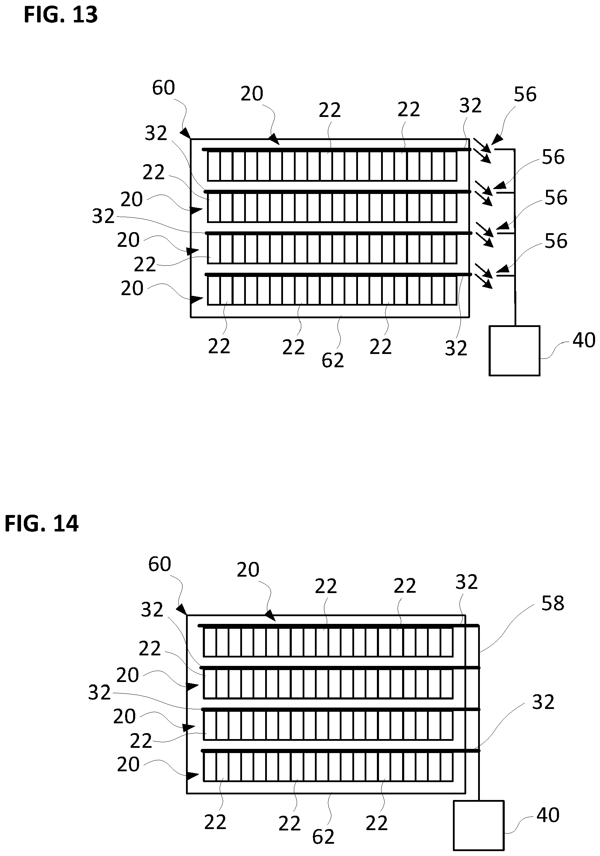

Fig. 13 shows a top view of an exemplary embodiment of a battery arrangement 20. The battery arrangement 20 shown in figure 13 may widely correspond to the battery arrangement 20 described with respect to figure 12. Therefore and in order to provide a concise description, only those features of the battery arrangement 20 shown in figure 13 are described in the following, in which the battery arrangement 20 shown in figure 13 differs from the battery arrangement 20 shown in figure 12.

The temperature safety means 30 may comprise one cable 32 per row of battery cells 22. The cables 32 may extend over all battery cells 22 of the corresponding row. Each of the cables 32 may be electrically coupled to a corresponding opto-isolator 56. The opto-isolators 56 may be electrically coupled to the control unit 40. The opto-isolators 56 may be referred to as optocouplers, photocouplers, or optical isolators. The opto-isolators 56 are electronic components that transfer electrical signals between two electrically isolated circuits, i.e. the cables 32 and the control unit 40, by using light. Each of the opto-isolators 56 may comprise an LED and a phototransistor, e.g. in the same opaque package. Other types of source-sensor combinations for the opto-isolator may comprise an LED-photodiode, an LED-LASCR, or lamp-photoresistor pairs. The (light) sources of the opto-isolators 56 may be driven by the voltage supplied by the cable 32. The sensors of the opto-isolators 56 may receive the light being representative for the voltage over the conductors 42 of the corresponding cables and may generate an electrical signal supplied to the control unit 40.

Fig. 14 shows a top view of an exemplary embodiment of a battery arrangement 20. The battery arrangement 20 shown in figure 14 may widely correspond to the battery arrangement 20 described with respect to figure 12. Therefore and in order to provide a concise description, only those features of the battery arrangement 20 shown in figure 14 are described in the following, in which the battery arrangement 20 shown in figure 14 differs from the battery arrangement 20 shown in figure 12.

The temperature safety means 30 may comprise one cable 32 per row of battery cells 22. The cables 32 may extend over all battery cells 22 of the corresponding row. Each of the cables 32 may be electrically coupled to a common bus bar 58 or distribution cable. The bus bar 58 may be electrically coupled to the control unit 40.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, the above battery arrangements 20 may comprise more or less battery cells 20. Further, the above battery packs 60 may comprise more or less rows of battery cells 20.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: battery arrangement
- 22: battery cell
- 24: tab
- 26: cell hull
- 28: electric insulation
- 30: temperature safety means
- 31: vent disc
- 32: cable
- 33: vent channel
- 34: longitudinal axis
- 35: cell-to-cell connector
- 36: first axial end
- 38: second axial end
- 40: control unit
- 42: conductor
- 44: cable jacket
- 46: melting material
- 48: insulation sheet
- 50: holder
- 52: insulation part
- 54: temperature sensor
- 56: opto-isolator
- 58: bus bar
- 60: battery pack
- 62: casing

## Claims

1. A battery arrangement (20), comprising:
two or more battery cells (22), wherein the battery cells (22) are arranged next to each other; and
temperature safety means (30) for detecting an over-temperature of one or more of the battery cells (22), wherein the temperature safety means (30) comprise
at least one cable (32) which is mechanically coupled to the battery cells (22), with the cable (32) comprising at least one electric conductor (42) extending through the cable (32) in axial direction, and
an electric insulation (28) between the conductor (42) and the battery cell (22), with the electric insulation (28) being configured for electrically isolating the electric conductor (42) against the battery cell (22) and with the electric insulation (28) being configured for ensuring a breakdown voltage of at least 1 kV.

2. The battery arrangement (20) in accordance with claim 1, wherein
the cable (32) comprises an electrically isolating cable jacket (44) surrounding the electric conductor (42) in radial direction.

3. The battery arrangement (20) in accordance with claim 2, wherein
the cable jacket (44) comprises a thickness and a dielectric strength configured such that the cable jacket (44) ensures the breakdown voltage on its own.

4. The battery arrangement (20) in accordance with one of the preceding claims, wherein
the cable (32) comprises two electric conductors (42) being spaced apart from and electrically isolated against each other and extending parallel and/or twisted to each other.

5. The battery arrangement (20) in accordance with claim 4, wherein
the cable (32) comprises a melting material (46) configured for melting, when a temperature of the melting material (46) exceeds a predetermined temperature threshold,
the conductors (42) are embedded within the melting material (46), and
the melting material (46) is arranged radially between the conductors (42).

6. The battery arrangement (20) in accordance with one of the preceding claims, wherein
the temperature safety means (30) comprise two or more holders (50) for mechanically coupling the cable (32) to the battery cells (22),
the cable (32) is coupled to the battery cells (22) by corresponding ones of the holders (50),
the holders (50) are arranged such that at least an insulation part (52) of each of the holders (50) is arranged between the cable (32) and the corresponding battery cell (22).

7. The battery arrangement (20) in accordance with claim 6, wherein
the holders (50) are configured such that a thickness and a dielectric strength of each of the insulation parts (52) is sufficient for ensuring the breakdown voltage on their own.

8. The battery arrangement (20) in accordance with one of claims 2 to 5 and one of claims 6 or 7, wherein
the cable jacket (44) and the insulation parts (52) are configured for ensuring the breakdown voltage together.

9. The battery arrangement (20) in accordance with one of the preceding claims, wherein
the temperature safety means (30) comprise two or more insulation sheets (48), with the insulation sheets (48) being arranged between the cable (32) and the corresponding battery cells (22).

10. The battery arrangement (20) in accordance with claim 9, wherein
each of the insulation sheets (48) is configured for ensuring the breakdown voltage on its own.

11. The battery arrangement (20) in accordance with one of claims 2 to 5 and with one of claims 9 or 10, wherein
the cable jacket (44) and the insulation sheets (48) are configured for ensuring the breakdown voltage together.

12. The battery arrangement (20) in accordance with one of claims 2 to 5 and with one of claims 9 or 10, wherein
the insulation parts (52) and the insulation sheets (48) are configured for ensuring the breakdown voltage together.

13. The battery arrangement (20) in accordance with one of claims 2 to 5 and with one of claims 9 or 10, wherein
the cable jacket (44), the insulation parts (52), and the insulation sheets (48) are configured for ensuring the breakdown voltage together.

14. The battery arrangement (20) in accordance with one of the preceding claims, wherein
the temperature safety means (30) comprise a control unit (40) for monitoring the temperature of the battery cells (22), and
the cable (32) is coupled to the control unit (40).

15. The battery arrangement (20) in accordance with claim 14, wherein
the temperature safety means (30) comprise at least one temperature sensor (54) for each of the battery cells (22),
the temperature sensors (54) are arranged at the battery cells (22) of the corresponding battery cells (22),
the temperature sensors (54) are electrically coupled to each other via the conductor (42) of the cable (32), and
the cable (32) is coupled to the control unit (40).
